# FASCICULE DE BREVET EUROPEEN

(11) **EP 2 235 297 B1**
(45) Date de publication et mention de la délivrance du brevet: **31.08.2011**
(21) Numéro de dépôt: 08865746.5
(22) Date de dépôt: 18.12.2008
(51) Int. Cl.: E04H 4/16

(54) **APPAREIL NETTOYEUR DE SURFACE IMMERGÉE À CIRCUIT SALE DÉMONTABLE**
VORRICHTUNG ZUR REINIGUNG EINER UNTERGETAUCHTEN FLÄCHE MIT EINEM ABTRENNBAREN SCHMUTZKREISLAUF
APPARATUS FOR CLEANING A SUBMERGED SURFACE WITH A DISCONNECTABLE DIRTY CIRCUIT

(30) Priorité: 21.12.2007 FR 0709002
(43) Date de publication de la demande: 06.10.2010
(73) Titulaire: Zodiac Pool Care Europe SAS, 75015 Paris (FR)
(72) Inventeur: PICHON, Philippe, 31800 Villeneuve de Riviere (FR); MASTIO, Emmanuel, 31450 Fourquevaux (FR)
(74) Mandataire: Cabinet BARRE LAFORGUE & associés
(86) Numéro de dépôt international: PCT/FR2008/052375
(87) Numéro de publication internationale: WO 2009/081064

(56) Documents cités:
- EP-A- 0 989 255
- FR-A- 2 869 058
- US-A1- 2002 104 790
- US-A1- 2004 074 524
- US-B1- 6 409 916

## Description

L'invention concerne un appareil nettoyeur de surface immergée dans un liquide, en particulier de piscine.

Certains appareils nettoyeurs de piscine connus comprenant :
- un corps creux et des organes de guidage et d'entraînement dudit corps sur la surface immergée selon une direction principale d'avancement, dite direction longitudinale,
- une chambre de filtration ménagée dans ledit corps creux et présentant :
   - au moins une entrée de liquide dans le corps creux située à la base du corps creux,
   - au moins une sortie de liquide hors du corps creux,
   - un circuit hydraulique adapté pour assurer une circulation de liquide entre chaque entrée et chaque sortie à travers un dispositif de filtrage monté dans la chambre de filtration, sous l'effet d'un dispositif de pompage.

Dans ces appareils connus, une trappe d'accès au dispositif de filtrage doit être prévue pour permettre le démontage de ce dernier en vue de procéder à son nettoyage. Or, dans les appareils antérieurs (US 6 0 13 178), la trappe d'accès au dispositif de filtration est en général située à la base du corps creux, les entrées de liquide étant alors nécessairement équipées de dispositifs anti-retour tels que des clapets. Or, cette disposition n'est pas commode pour l'utilisateur qui doit préalablement renverser l'appareil, ce qui peut l'endommager et par ailleurs provoquer des écoulements intempestifs désagréables. À défaut, si la trappe d'accès est disposée au-dessus de l'appareil, le circuit hydraulique doit alors présenter un cheminement particulièrement tortueux (cf. par exemple US 6 409 916), ce qui impose d'utiliser des dispositifs de pompage de forte puissance, entraînant ainsi une dépense énergétique importante.

En outre, dans l'ensemble des appareils connus, le circuit sale, c'est-à-dire, la partie du circuit hydraulique de l'appareil qui véhicule du liquide non encore filtré par le dispositif de filtrage et susceptible de comporter des débris, n'est pas aisément accessible à l'utilisateur. En particulier, dans certains appareils (US 6 409 916), l'accès à ce circuit sale peut imposer le démontage de l'appareil, ce qui ne peut être réalisé que par un technicien spécialisé, sous peine notamment de ne pas pouvoir faire jouer l'éventuelle garantie constructeur de l'appareil. Dans d'autres appareils, l'accès à ce circuit sale nécessite de surcroît de retourner l'appareil. En conséquence, les circuits sales des appareils connus ne sont en pratique jamais totalement nettoyés. Il en résulte que ces appareils ne présentent pas des performances de filtration stables au cours du temps, notamment lors du nettoyage de surfaces fortement encombrés de débris. De plus, les périodes de service de l'appareil entre lesquelles un nettoyage doit être effectué sont relativement brèves si la surface est très encombrée de débris et surtout très variables selon la nature des déchets récupérés, de sorte qu'elles varient de manière aléatoire pour l'utilisateur. Par exemple si le bassin est propre mais que l'appareil aspire une seule feuille de grande dimension, cette feuille est susceptible d'obturer sensiblement le dispositif de filtrage, imposant un nettoyage du dispositif de filtrage. Ainsi les performances de filtration et d'aspiration de ces appareils connus peuvent chuter brutalement, de façon aléatoire du point de vue de l'utilisateur, et alors que la quantité de débris récupérée est très inférieure à celle correspondant à la capacité du dispositif de filtrage. Cela étant, les performances de l'appareil, quelle que soit la fréquence de nettoyage du dispositif de filtrage, ne sont jamais équivalentes aux performances de nettoyage initiales, le circuit sale de l'appareil n'étant jamais totalement nettoyé.

Par ailleurs, les opérations d'extraction et de nettoyage des dispositifs de filtrage sont salissantes, désagréables, et susceptibles de souiller l'appareil et/ou l'utilisateur et/ou la piscine. Le document EPO989255 décrit un appareil nettoyeur de surface immergée qui comprend les caractéristiques du préambule de la revendication 1.

Dans ce contexte, l'invention vise à proposer un appareil nettoyeur de surface immergée permettant un nettoyage aisé de l'intégralité du circuit hydraulique recevant du liquide susceptible de présenter des débris.

L'invention vise également à proposer un appareil nettoyeur de surface immergée dont les performances de filtration sont stables au cours du temps, quelle que soit la nature des débris, y compris lors du nettoyage de surface immergée fortement encombrée de débris, notamment de débris volumineux présentant un encombrement supérieur à une pièce de 2 euros.

L'invention vise également à proposer un tel appareil pouvant présenter une trappe d'accès située sur le dessus, mais avec un dispositif de filtration présentant un grand volume de stockage des débris et un circuit hydraulique simple.

L'invention vise également à proposer un appareil nettoyeur de surface immergée dont le rapport performances/coût est grandement amélioré par rapport à celui des appareils antérieurs. Plus particulièrement, l'invention vise à proposer un tel appareil dont le coût peut être sensiblement abaissé, pour des performances équivalentes, voire supérieures à celles des appareils connus.

L'invention vise également à proposer un tel appareil exempt de tous dispositifs mobiles anti-retour tels que des clapets anti-retours.

Pour ce faire, l'invention concerne un appareil nettoyeur de surface immergée comprenant :
- un corps creux et des organes de guidage et d'entraînement dudit corps sur la surface immergée selon une direction principale d'avancement, dite direction longitudinale,
- une chambre de filtration ménagée dans ledit corps creux et présentant :
   au moins une entrée de liquide située à la base dudit corps creux au voisinage d'une extrémité longitudinale du corps creux déterminant l'avant du corps creux,
   . au moins une sortie de liquide hors dudit corps creux,
   . un circuit hydraulique adapté pour assurer une circulation de liquide entre chaque entrée et chaque sortie à travers un dispositif de filtrage sous l'effet d'un dispositif de pompage,
      caractérisé en ce que le dispositif de filtrage comprend au moins un boîtier filtrant monté dans la chambre de filtration de façon à être amovible alors que l'appareil repose sur une surface horizontale dans une position correspondant à sa position de nettoyage lorsqu'il est en fonctionnement sur une surface immergée,
- ce boîtier filtrant constituant et délimitant entièrement la partie du circuit hydraulique susceptible de transporter des débris, dite circuit sale,
- ce boîtier filtrant étant adapté pour pouvoir être inséré d'un seul tenant dans la chambre de filtration et extrait d'un seul tenant hors de cette chambre de filtration,
- ce boîtier filtrant présentant, lorsque monté dans la chambre de filtration, au moins une extrémité inférieure débouchant à la base dudit corps creux et constituant une entrée de liquide dans le corps creux de l'appareil.

Un appareil selon l'invention permet un démontage d'un boîtier filtrant alors que l'appareil repose sur une surface horizontale, dans une position correspondant à sa position de nettoyage lorsqu'il est en fonctionnement sur une surface immergée c'est-à-dire avec la base du corps creux en regard de la surface horizontale. Ainsi, l'extraction du boîtier filtrant de l'appareil peut être réalisée sans retourner ce dernier. Cette extraction peut être réalisée par l'avant de l'appareil, et/ou par l'arrière de l'appareil et/ou par le dessus de l'appareil.

En outre, le boîtier filtrant comprend une extrémité inférieure qui débouche à la base du corps creux et qui constitue une entrée de liquide. Les inventeurs ont réalisé qu'il était possible de réaliser un boîtier filtrant qui ne s'extrait pas par la base du corps creux et qui s'étend néanmoins jusqu'à la base du corps creux de telle sorte que ce boîtier filtrant forme une entrée de liquide. En particulier, ce boîtier filtrant forme une partie « sale » du circuit hydraulique de l'appareil, c'est-à-dire une partie du circuit hydraulique susceptible de transporter des débris. Dans toute la suite, cette partie du circuit hydraulique est dite circuit sale. Ce circuit sale est intégralement démontable. En outre, le démontage de ce circuit sale résulte du démontage du boîtier filtrant. Un utilisateur peut donc aisément démonter le circuit sale de l'appareil pour procéder à son nettoyage alors que l'appareil repose sur une surface horizontale. Un utilisateur peut donc nettoyer ce circuit sale, ce qui permet de redonner à un appareil selon l'invention ses performances initiales. En outre, le boîtier filtrant formant une entrée de liquide, il est aisé avec un appareil selon l'invention de nettoyer cette entrée de liquide, de déboucher cette dernière, par exemple suite au blocage d'un gros débris dans cette entrée, sans néanmoins nécessite de retourner l'appareil. Un appareil selon l'invention réalise le tour de force de permettre le démontage et le nettoyage d'au moins une entrée de liquide située à la base du corps creux sans imposer d'accéder manuellement à la base du corps creux et sans nécessiter de retourner l'appareil.

Le boîtier filtrant d'un appareil selon l'invention constituant entièrement le circuit sale, un utilisateur peut retirer complètement d'un seul tenant tout le circuit sale de l'appareil. En outre, ce circuit sale étant entièrement délimité par le boîtier filtrant, l'utilisateur n'est jamais en contact avec une partie sale de l'appareil. De même, aucun organe de l'appareil n'est en contact avec une partie du circuit sale, ce dernier étant entièrement circonscrit dans le boîtier filtrant. Ainsi, la maintenance de l'appareil peut être effectuée sans risque de salissure de l'utilisateur, de l'appareil ou de la piscine, dans un environnement parfaitement propre. Cela est d'autant plus vrai que le boîtier filtrant forme une enceinte délimitant le circuit sale et close vis-à-vis des déchets solides à l'exception de chaque entrée de liquide.

Les inventeurs ont en outre constaté que cet agencement particulier permet à la fois de conserver les performances d'aspiration, sans augmenter son encombrement vertical, et donc sa traînée hydraulique, et avec un dispositif de filtration particulièrement efficace, de grand volume de stockage des débris et sans perte de charge nuisible.

Avantageusement et selon l'invention, chaque entrée de liquide dans le corps creux est formée d'une extrémité inférieure d'un boîtier filtrant monté amovible dans la chambre de filtration. Un tel appareil permet donc le démontage aisé de l'intégralité du circuit sale, chaque entrée de liquide dans l'appareil étant formée d'une extrémité inférieure d'un boîtier filtrant. Chaque entrée de liquide dans le corps creux est ainsi nettoyée dus simple fait du démontage du boîtier filtrant correspondant, sans nécessiter de retourner l'appareil.

Avantageusement et selon l'invention, le dispositif de filtrage est constitué d'un unique boîtier filtrant monté amovible dans la chambre de filtration. Selon cette variante et de préférence, l'appareil comprend une entrée de liquide unique formée par l'extrémité de l'unique boîtier filtrant, et une sortie de liquide unique.

Un boîtier filtrant d'un appareil selon l'invention peut présenter diverses formes et dimensions. Un tel boîtier peut être inséré dans la chambre de filtration et extrait de cette dernière d'un seul tenant en vue de son nettoyage ou de son remplacement. Pour ce faire, un tel boîtier peut être formé d'une ou plusieurs pièces assemblées les unes aux autres par tous types de moyens. En particulier, un tel boîtier peut être formé d'une ou plusieurs coques rigides, semi-rigides ou souples.

Avantageusement et selon l'invention, chaque boîtier filtrant comprend :
- une première coque présentant des parois périphériques filtrantes s'étendant vers l'arrière à partir d'une ouverture avant de cette première coque et délimitant, vers l'arrière, un volume de récupération des débris, lesdites parois filtrantes étant adaptées pour retenir les éventuels débris véhiculés par le liquide et pour autoriser l'écoulement du liquide hors de cette première coque,
- une deuxième coque assemblée à la première coque à l'avant de celle-ci, ces deux coques et leur assemblage relatif étant adaptés de façon que :
   - lorsque les deux coques sont assemblées l'une à l'autre, la deuxième coque referme ladite ouverture avant de la première coque, à l'exception d'un passage d'entrée du liquide constituant une ouverture d'entrée du liquide dans ledit volume de récupération des débris, la section de cette ouverture d'entrée étant plus petite que celle de l'ouverture avant de la première coque,
   - les deux coques assemblées peuvent être déplacées l'une par rapport à l'autre, après extraction du boîtier filtrant hors de la chambre de filtration, en dégageant ladite ouverture avant de la première coque faisant office d'ouverture de vidange de cette première coque.

Un appareil selon l'invention comprenant un tel dispositif de filtrage à deux coques assemblées l'une à l'autre de façon qu'une fois assemblées elles forment un boîtier filtrant d'un seul tenant aisément extractible de l'appareil, est particulièrement pratique à l'utilisation. En effet, un tel boîtier filtrant présente une première coque qui fait office de poche de récupération des débris et une seconde coque qui fait office de conduit d'entrée de liquide et vient obstruer en partie la poche de récupération des débris de telle sorte que lorsque l'appareil est en fonctionnement sur une surface immergée, les débris viennent se loger dans la poche de récupération des débris sans pouvoir ressortir par l'entrée de liquide. Ainsi, lors de l'extraction du boîtier filtrant hors du boîtier creux, les débris et saletés restent logés dans cette poche sans risque de ressortir par l'entrée de liquide, ce qui garantit un respect absolu de la propreté de l'environnement (appareil, utilisateur, piscine...).

De plus, les deux coques sont adaptées pour pouvoir être dissociées l'une de l'autre, une fois le boîtier filtrant extrait de l'appareil. Dès lors, il est particulièrement commode de nettoyer le dispositif de filtrage en séparant les deux coques l'une de l'autre et en procédant à l'extraction des débris coincés dans la poche de récupération des débris. Une fois la première coque nettoyée, un utilisateur peut assembler les coques l'une à l'autre et réinsérer la boîtier filtrant ainsi formé dans l'appareil.

Avantageusement et selon l'invention, les deux coques sont assemblées l'une à l'autre de façon à pouvoir être dissociées l'une de l'autre par simple manipulation sans outils.

Par exemple, selon une variante de l'invention, les coques sont assemblées l'une à l'autre par des moyens d'encastrement réversible.

Avantageusement et selon l'invention, l'ouverture avant de la première coque s'étend sur le pourtour d'une paroi arrière de la deuxième coque et de l'ouverture d'entrée.

Avantageusement et selon l'invention, les deux coques sont assemblées l'une à l'autre selon une zone de jonction qui s'étend globalement transversalement et orthogonalement à la direction longitudinale.

Avantageusement et selon l'invention, la deuxième coque forme au moins un conduit d'entrée de liquide s'étendant à partir d'une extrémité inférieure de ce conduit d'entrée débouchant à la base du corps creux et constituant une entrée de liquide.

Un tel agencement est particulièrement efficace étant donné que le boîtier filtrant ainsi formé comprend une extrémité inférieure qui débouche à la base du corps creux et qui constitue une entrée de liquide. Ainsi, ce boîtier filtrant forme la partie « sale », dite circuit sale, du circuit hydraulique de l'appareil, c'est-à-dire la partie du circuit hydraulique susceptible de transporter des débris. Le boîtier filtrant étant démontable, le circuit sale est intégralement démontable. Un utilisateur peut donc nettoyer ou changer l'intégralité du circuit sale de l'appareil et redonner ainsi à un appareil selon l'invention ses performances initiales.

Avantageusement et selon l'invention, la deuxième coque présente une paroi arrière de séparation transversale s'étendant transversalement à l'avant dudit volume de récupération des débris, entre chaque entrée de liquide et ladite ouverture d'entrée ménagée à une extrémité supérieure dudit conduit d'entrée.

Cette paroi arrière transversale fait office de paroi anti-retour de telle sorte que les débris ayant passés cette paroi ne peuvent plus ressortir par l'entrée de liquide, y compris à l'arrêt du dispositif de pompage, ce qui supprime la nécessité de ménager des clapets ou autres dispositifs anti-retour sur les entrées de liquide.

En outre, les inventeurs ont constaté que l'agencement de cette paroi sur la trajectoire du liquide entre chaque entrée de liquide et chaque sortie de liquide, qui de prime abord peut sembler défavorable du point de vue des performances hydrauliques (débit, aspiration, ...), permet en réalité d'améliorer les performances de filtration par la génération de turbulences au sein du dispositif de filtrage dans le circuit sale, en amont des parois filtrantes, turbulences qui maintiennent en permanence les débris en suspension dans le dispositif de filtrage, évitant ainsi le colmatage des parois du dispositif de filtrage, et favorisant finalement les performances hydrodynamiques du dispositif de filtrage et du circuit hydraulique.

En d'autres termes, les pertes de charges induites par l'agencement d'une paroi sur le trajet hydraulique sont compensées par le maintien de la perméabilité initiale des parois filtrantes du dispositif de filtrage. De plus, les périodes de service entre lesquelles l'appareil doit être nettoyé sont plus longues et surtout de durées sensiblement constantes, au bénéficie d'un plus grand confort d'utilisation.

Avantageusement et selon l'invention, la première coque comprend une ossature rigide adaptée pour imposer une forme tridimensionnelle à ces parois périphériques, et une nappe filtrante s'étendant dans des ouvertures ménagées par l'ossature rigide.

Avantageusement et selon l'invention, ladite première coque présente une section droite transversale décroissante de l'avant vers l'arrière.

Un dispositif de filtrage dont la section droite transversale est décroissante de l'avant vers l'arrière permet d'assurer une filtration du type essentiellement tangentielle du liquide circulant dans le dispositif de filtrage. Une telle filtration principalement tangentielle limite le colmatage par des débris obstruants (tels que des feuilles mortes) sur les parois filtrantes du dispositif, ce qui garantit, y compris après une longue période de fonctionnement, une bonne aspiration et un bon filtrage. En outre, il semblerait qu'une telle coque convergente entraîne aussi un tourbillonnement du liquide circulant dans cette poche, ce qui assure un décolmatage continu des parois de la poche ayant pour effet de restituer aux différentes parois de la poche leur perméabilité initiale.

Avantageusement et selon l'invention, ladite première coque présente une paroi supérieure horizontale s'étendant à partir de l'ouverture avant, et une paroi arrière inférieure inclinée vers l'arrière et vers le haut depuis une portion de fond de la coque, jusqu'à une portion extrême arrière supérieure.

Avantageusement et selon l'invention, l'une au moins des coques présente une poignée de manipulation du boîtier filtrant.

Une telle poignée permet une manipulation aisée du boîtier filtrant lorsque les deux coques sont assemblées l'une à l'autre.

Avantageusement et selon l'invention, ladite trappe d'accès est ménagée sur une paroi supérieure du corps creux.

Un tel appareil est particulièrement pratique à manipuler étant donné que l'extraction du dispositif de filtrage de l'appareil n'impose pas de manipulations délicates de l'appareil. En particulier, il n'est pas nécessaire de retourner l'appareil pour retirer le dispositif de filtrage en vue de son nettoyage. Le démontage du dispositif de filtrage peut être réalisé alors que l'appareil est au repos, dans sa position normale, sur une surface horizontale.

Avantageusement, un appareil selon l'invention est exempt de clapet anti-retour de liquide.

Avantageusement, un appareil selon l'invention comprend au moins une sortie de liquide hors du corps creux, dite sortie arrière, décalée vers l'arrière par rapport au boîtier filtrant.

Avantageusement, un appareil selon l'invention comprend une sortie arrière générant un flux de liquide orienté avec une composante longitudinale vers l'arrière.

Ces agencements permettent de concevoir l'appareil de façon à récupérer directement au moins une partie de l'énergie hydraulique résiduelle dans le flux de sortie pour participer à l'entraînement de l'appareil.

En conséquence, à performances d'aspiration et de nettoyage équivalentes, un appareil selon l'invention peut être doté d'un moteur de pompage -notamment un moteur électrique de pompage- et d'un dispositif d'entraînement -notamment comprenant au moins un moteur électrique d'entraînement- dont la puissance est réduite, et donc de consommation et de coûts réduits. Il en résulte également un volume général et un poids plus faibles de l'appareil ce qui, outre l'économie réalisée, est un avantage important pour l'utilisateur, notamment en termes de manipulations, de transport, et de stockage de l'appareil.

Avantageusement, un appareil selon l'invention comprend un dispositif motorisé de pompage du liquide entre chaque entrée de liquide et chaque sortie de liquide via le boîtier filtrant.

L'invention concerne en outre un appareil nettoyeur de surface immergée caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique en perspective d'un appareil nettoyeur selon un mode de réalisation de l'invention,
- la figure 2 est une vue schématique arrière d'un appareil nettoyeur selon un mode de réalisation de l'invention,

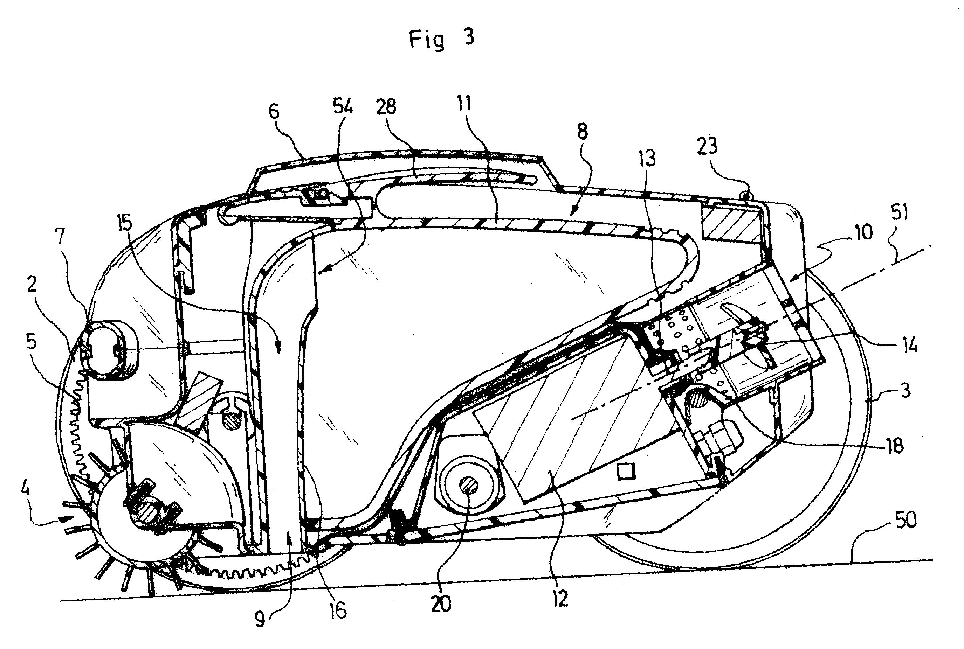

- la figure 3 est une vue schématique en coupe d'un appareil nettoyeur selon un mode de réalisation de l'invention,

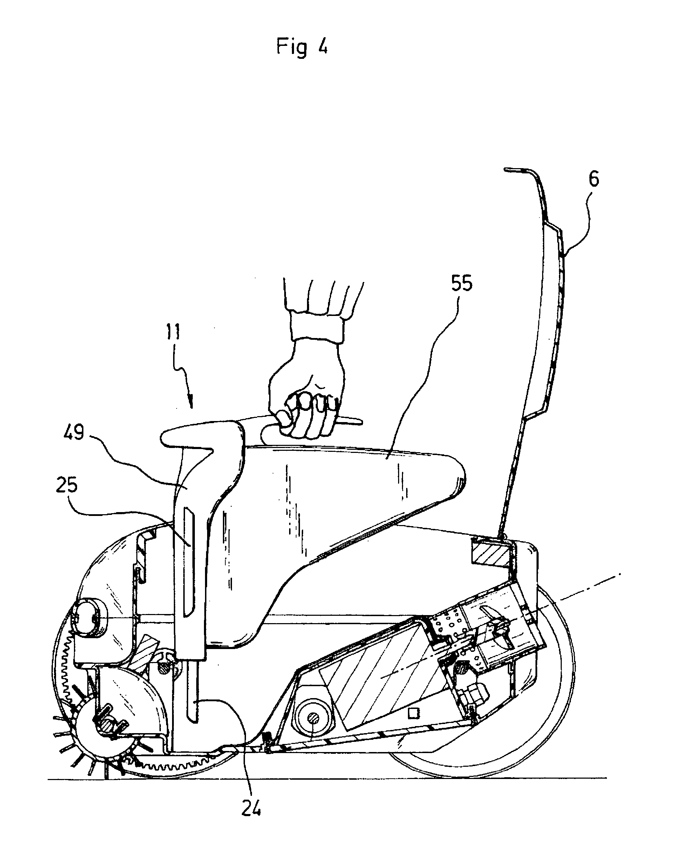

- la figure 4 est une vue schématique en coupe d'un appareil nettoyeur selon un mode de réalisation dont le dispositif de filtrage est en cours d'extraction de l'appareil,

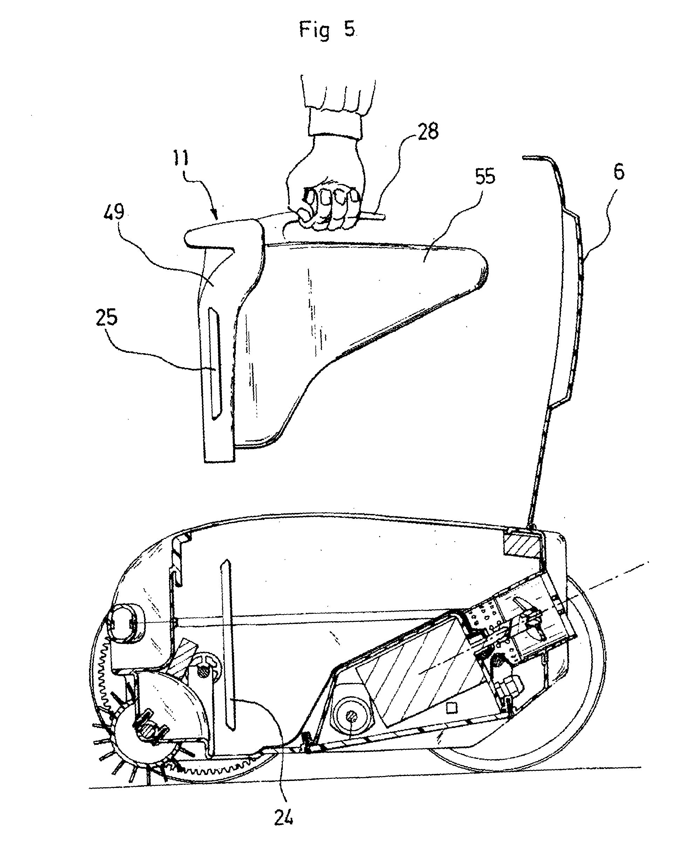

- la figure 5 est une vue schématique en perspective de l'appareil nettoyeur selon la figure 4,

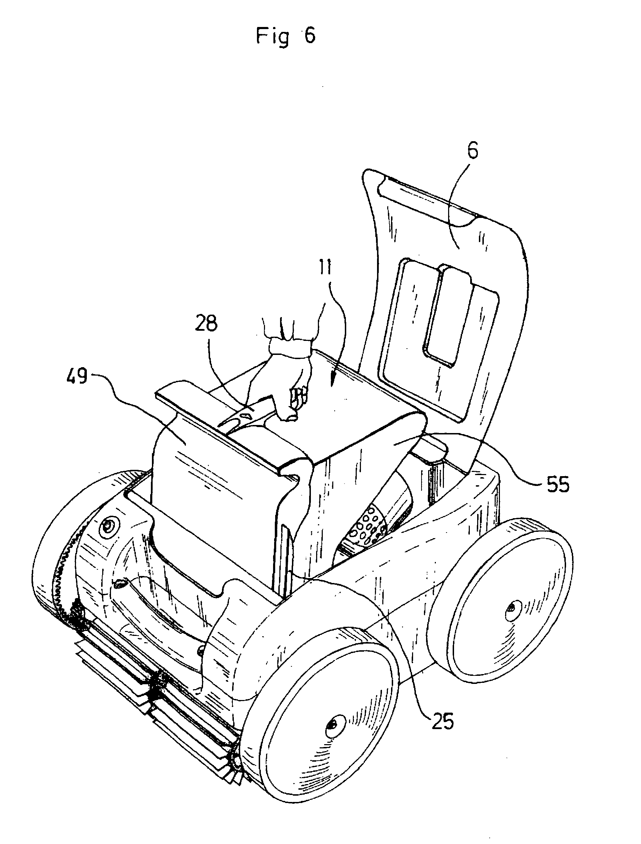

- la figure 6 est une vue schématique en coupe d'un appareil nettoyeur selon un mode de réalisation dont le dispositif de filtrage est totalement extrait de l'appareil,

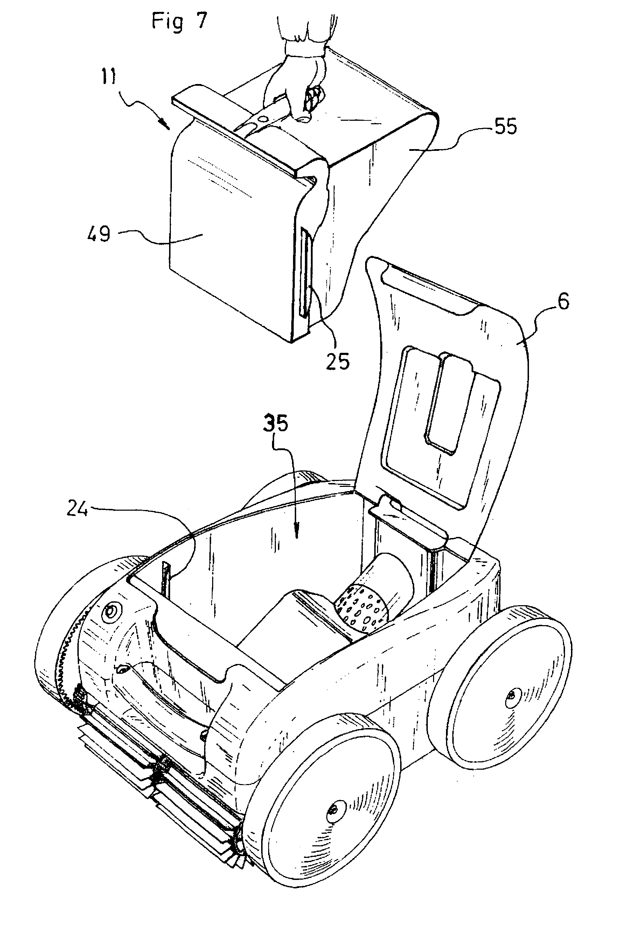

- la figure 7 est une vue schématique en perspective de l'appareil nettoyeur selon la figure 6,
- la figure 8 est une vue schématique en perspective du dispositif de filtrage d'un appareil selon un mode de réalisation de l'invention comprenant deux coques assemblées l'une à l'autre,

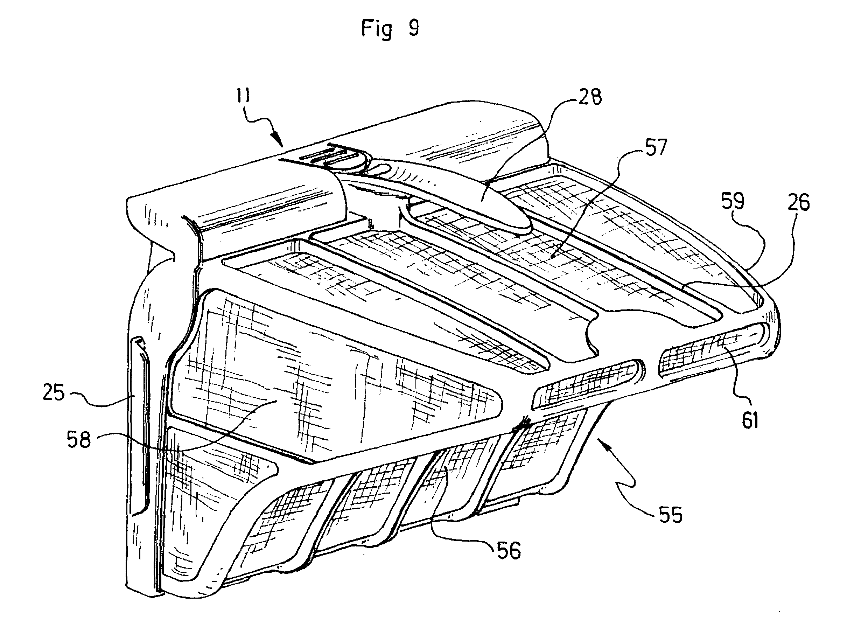

- la figure 9 est une vue schématique en perspective du dispositif de filtrage de la figure 8 représentant les deux coques séparées l'une de l'autre,
- la figure 10 est une vue schématique en coupe simplifiée de la figure 3 représentant l'appareil en fonctionnement sur une surface immergée.

Sur les figures, les échelles et les proportions ne sont pas strictement respectées et ce, à des fins d'illustration et de clarté.

Dans toute la description détaillée qui suit en référence aux figures, sauf indication contraire, chaque pièce de l'appareil nettoyeur est décrite tel qu'elle est agencée lorsque l'appareil est en déplacement normal sur une surface immergée horizontale selon un sens privilégié d'avancement, par rapport auquel l'avant et l'arrière sont définis.

Un appareil selon l'invention comprend un corps 1 creux et des organes 2, 3, 4 roulants de guidage et d'entraînement du corps 1 creux sur une surface immergée dans au moins un sens privilégié d'avancement et selon une direction principale d'avancement, dite direction longitudinale, parallèle à la surface immergée.

Ce corps 1 creux est formé principalement d'un carter concave délimitant une enceinte 35 principale. Ce carter concave est par exemple réalisé par moulage ou rotomoulage. Ce carter est de préférence réalisé en un matériau thermoplastique, tel que le polyéthylène, le polypropylène, l'ABS, le PMMA ou tout matériau équivalent.

Ce corps 1 creux présente une enceinte 35 centrale adaptée pour recevoir une chambre de filtration. Cette enceinte 35 centrale est délimitée par une paroi inférieure s'étendant dans un plan sensiblement horizontal ; par des parois latérales s'étendant globalement dans des plans verticaux ; par une paroi avant s'étendant globalement dans un plan vertical, orthogonale aux plans des parois latérales verticales ; et par une paroi arrière s'étendant globalement dans un plan vertical orthogonal aux plans des parois latérales verticales.

La paroi inférieure présente une ouverture s'étendant transversalement au voisinage de la paroi avant de telle sorte que du liquide peut rentrer dans l'enceinte centrale par cette ouverture inférieure transversale. Cette ouverture forme une entrée 9 de liquide dans le corps 1 creux.

La paroi arrière comprend une ouverture cylindrique formant une sortie 10 de liquide hors du corps 1 creux. Cette sortie 10 de liquide ménagée dans la paroi arrière du carter est longitudinalement décalée de l'entrée 9 de liquide ménagée dans la paroi inférieure. De plus, cette sortie 10 de liquide est agencée dans la partie haute du carter de telle sorte qu'elle est également verticalement décalée de l'entrée 9 de liquide.

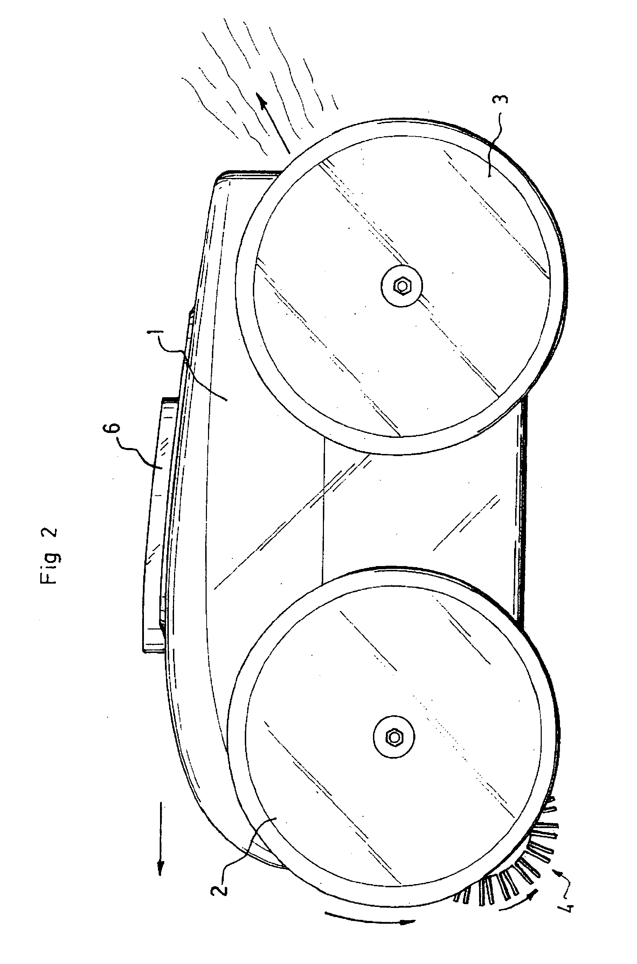

Comme représenté notamment sur la figure 2, cette enceinte centrale, cette entrée 9 de liquide et cette sortie 10 de liquide forme une chambre 8 de filtration. Cette chambre 8 de filtration comprend en outre un circuit hydraulique adapté pour assurer une circulation de liquide entre l'entrée 9 de liquide et la sortie 10 de liquide à travers un dispositif 11 de filtrage.

De préférence, l'entrée 9 de liquide et la sortie 10 de liquide sont centrées sur un même plan longitudinal vertical médian de l'appareil.

L'enceinte centrale du corps 1 creux est adaptée pour recevoir un dispositif 11 de filtrage. Le dispositif 11 de filtrage comprend deux coques, une première coque 49 formant une poche de récupération des débris et une deuxième coque 49 adaptée pour être assemblée à la première coque 55 de manière à former un boîtier filtrant.

La poche de récupération des débris formée par la première coque 55 du dispositif 11 de filtrage présente des parois 56, 57, 58, 59 périphériques filtrantes s'étendant vers l'arrière à partir d'une ouverture 64 avant. Ces parois 56, 57, 58, 59 filtrantes sont adaptées pour retenir les éventuels débris véhiculés par le liquide et pour autoriser l'écoulement du liquide hors de cette coque 55.

La deuxième coque 49 forme un conduit 15 d'entrée de liquide dans le corps 1 creux qui s'étend à partir d'une extrémité inférieure de ce conduit 15 d'entrée débouchant à la base du corps 1 creux et constituant une entrée 9 de liquide.

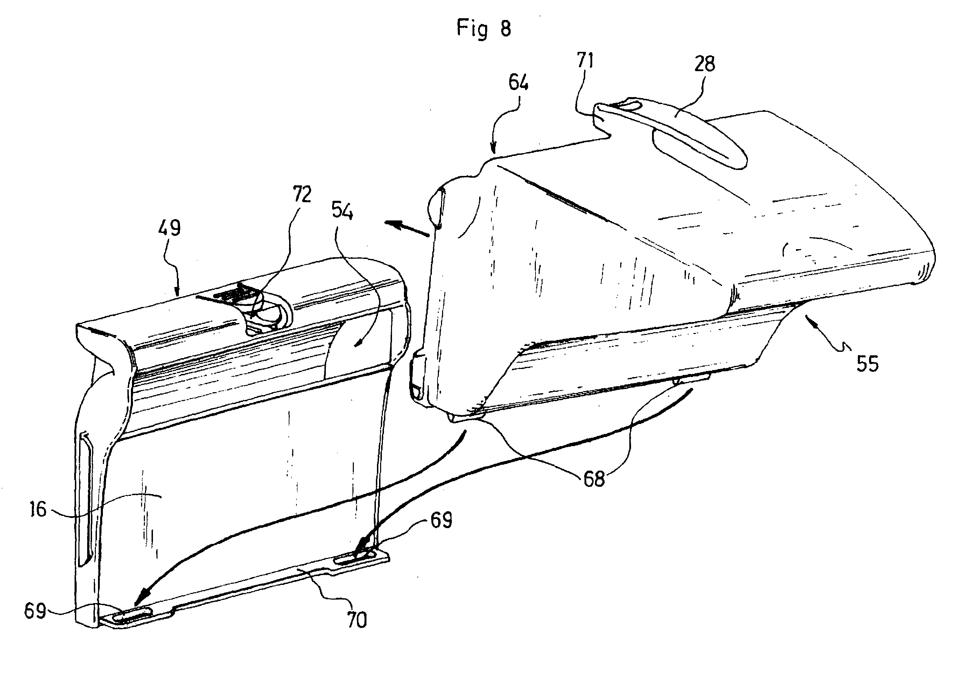

L'assemblage entre la première coque 55 et la deuxième coque 49 peut être réalisé par divers moyens. Par exemple et tel que représenté sur la figure 8, la première coque 55 comprend, au niveau de son extrémité inférieure avant, des tenons 68 qui s'étendent en saillie du plan de l'ouverture 64 de la première coque 55. Ces tenons 68 présentent des formes et dimensions conformées et conjuguées à des lumières 69 ménagées dans des languettes 70 solidaires de l'extrémité inférieure arrière du conduit 15 d'entrée, et sensiblement perpendiculaire à la paroi 16 arrière du conduit, de telle sorte que ces tenons 68 peuvent s'enchâsser dans les lumières 69 et permettre une liaison mécanique des extrémités inférieures de la première coque 55 et de la deuxième coque 49. En outre, la première coque 55 présente au niveau de son extrémité supérieure avant un élément 71 adapté pour venir se loger dans un taquet 72 ménagé au niveau de l'extrémité supérieure de la paroi avant du conduit 15 de manière à permettre l'assemblage entre les extrémités supérieures de la première coque 55 et de la seconde coque 49. Cet élément 71 fait saillie par rapport au plan de l'ouverture 64 et présente une réglette qui s'étend vers le bas, non représentée sur les figures, et adaptée pour venir s'emboîter dans le taquet 72. L'extrémité du taquet 72 orientée vers la première coque 55 est en outre biseautée pour faciliter l'insertion de la réglette de l'élément 71 dans le taquet 72. De plus, ce taquet 72 est flexible en compression de telle sorte qu'il peut se déformer légèrement vers le bas lors de l'emboîtement entre l'élément 71 et ce taquet 72. Cette flexibilité en compression permet également à un utilisateur d'exercer une pression vers le bas sur le taquet 72, par exemple avec son pouce, ce qui permet de désengager la réglette de l'élément 71 du taquet 72, entraînant ainsi une séparation des extrémités supérieures de la première coque 55 et du conduit 15. L'assemblage entre la première coque 55 et la seconde coque 49 est réalisé en assemblant d'abord les extrémités inférieures l'une à l'autre, puis en emboîtant les extrémités supérieures l'une dans l'autre. La séparation des coques est réalisé en désengageant d'abord les extrémités supérieures l'une de l'autre, puis en désengageant les extrémités inférieures l'une de l'autre. L'assemblage et la séparation de la première 55 et de la seconde coque 49 peuvent donc être aisément réalisés sans outils par un utilisateur.

Cet assemblage relatif entre la première coque 55 et la seconde coque 49 est adapté pour qu'une fois assemblés, la seconde coque 49 referme ladite ouverture 64 avant de la première 55, à l'exception d'un passage d'entrée du liquide constituant une ouverture 54 d'entrée du liquide dans la première coque 55, la section de cette ouverture 54 d'entrée étant plus petite que celle de l'ouverture 64 avant de la première coque 55.

La première coque 55 est formée d'une ossature 26 rigide et d'une nappe filtrante -notamment un tissu filtrant- s'étendant dans des ouvertures ménagées par cette ossature. Le dispositif 11 de filtrage est donc autoporteur et peut être aisément manipulé par un utilisateur. En outre, ce dispositif 11 de filtrage forme un boîtier filtrant extractible dont l'extrémité inférieure définie par l'extrémité inférieure du conduit 15 d'entrée forme l'entrée 9 de liquide dans le corps 1 creux.

De plus, la première coque 55 présente une section droite transversale décroissante de l'ouverture 64 avant vers la sortie 10 de liquide de façon à former une enceinte convergente de filtration du type tangentielle du liquide circulant entre l'ouverture 54 et la sortie 10 de liquide.

Selon le mode de réalisation des figures, la première coque 55 présente une paroi 56 inférieure filtrante inclinée vers l'arrière et vers le haut depuis une portion de fond de la première coque 55. Cette paroi 56 inférieure inclinée forme avec la direction longitudinale un angle, qui dans l'exemple représenté est de l'ordre de 45°.

Cette première coque 55 comprend en outre une paroi 57 supérieure globalement horizontale et s'étendant vers l'arrière à partir de l'ouverture 64 avant. Cette paroi 57 supérieure filtrante est reliée à la paroi 56 inférieure filtrante par une portion 61 courbe extrême arrière supérieure. La portion 61 courbe extrême arrière présente une section droite transversale minimale alors que la portion de la première coque 55 à l'opposée de cette portion 61 courbe, c'est-à-dire, au niveau de l'ouverture 64 avant, présente une section droite transversale maximale. Ainsi, la première coque 55 présente une section droite transversale décroissante de l'ouverture 64 avant vers la portion 61 courbe extrême arrière, c'est-à-dire vers la sortie 10 arrière. En d'autres termes, la première coque 55 présente une section droite transversale ayant la forme d'un triangle rectangle, la paroi 56 inférieure inclinée formant l'hypoténuse.

L'appareil comprend également une trappe 6 d'accès à ce dispositif de filtrage. Cette trappe 6 d'accès forme une paroi supérieure du corps 1 creux et recouvre ce dernier. Dans le mode de réalisation représenté, cette trappe 6 est ménagée sur le dessus de l'appareil de telle sorte qu'un utilisateur de l'appareil peut aisément procéder à l'ouverture de la trappe 6 et extraire le dispositif 11 de filtrage. De préférence, la trappe 6 d'accès est articulée au corps 1 de l'appareil par des charnières 23 agencées à l'arrière de l'appareil.

De préférence, le dispositif 11 de filtrage est un dispositif monté dans l'enceinte 35 centrale du corps 1 creux à la façon d'un tiroir. Pour ce faire, l'ossature 26 rigide du dispositif 11 de filtrage présente en outre deux nervures 25 s'étendant latéralement de chaque côté du dispositif 11 de filtrage. Ces nervures sont de préférence ménagées sur les parois latérales du conduit 15 d'entrée étant donnée que ce conduit ne présente pas de parois filtrantes. Néanmoins, elles pourraient selon d'autres modes de réalisation être aménagées sur les parois latérales des parois filtrantes, par exemple sur l'ossature 26 de la première coque 55. Où quelle soient, ces nervures 25 présentent des formes et dimensions conformées et conjuguées aux formes et dimensions de rainures 24 solidaires du corps 1 creux. Ces rainures 24 solidaires du corps 1 creux s'étendent verticalement le long des faces intérieures des parois latérales verticales du corps 1 creux. Les nervures 25 du dispositif 11 de filtrage sont donc adaptées pour coopérer avec les rainures 24 du corps 1 creux de l'appareil.

Ainsi, l'extraction du dispositif 11 de filtrage, tel que représenté assemblé sur la figure 8, résulte d'un déplacement en translation du dispositif 1 1 de filtrage le long des rainures 24 du corps 1 creux. Un utilisateur peut donc aisément retirer le dispositif 11 de filtrage du corps 1 creux en vue par exemple de procéder à son nettoyage. Une fois le dispositif 11 de filtrage extrait, un utilisateur peut aisément, comme indiqué précédemment, séparer les deux coques formant ce dispositif. Cet utilisateur peut donc nettoyer la première coque 55 qui fait office de poche de récupération des débris, ainsi que le conduit 15 d'entrée et l'entrée 9 de liquide agencée à l'extrémité inférieure du conduit 15 d'entrée. Une fois la première coque 55 formant la poche de récupération des débris et la deuxième coque 49 formant le conduit 15 d'entrée nettoyés, l'utilisateur peut aisément assemblés cette première coque 55 et cette seconde coque 49, comme indiqué précédemment, et réintroduire sans difficultés le dispositif 11 de filtrage d'un seul tenant dans le corps 1 creux en orientant le dispositif 11 de filtrage de sorte que les nervures 25 du dispositif 11 de filtrage soient en regard des rainures 24 du corps creux, puis en coulissant le dispositif 11 de filtrage dans le corps 1 creux.

Le dispositif 11 de filtrage comprend en outre une poignée 28 ménagée sur une portion supérieure du dispositif 11 de filtrage de manière à faciliter les manipulations du dispositif 11 de filtrage. En particulier, un utilisateur peut aisément monter/démonter le dispositif 11 de filtrage par l'intermédiaire de cette poignée 28 lorsque l'appareil est hors du liquide et repose sur une surface horizontale. Selon un mode de réalisation particulièrement avantageux, la poignée 28 est le prolongement de la portion arrière du pêne 71 sur laquelle un utilisateur peut exercer une pression pour dégager le pêne 71 de la gâche 72 ménagé dans le conduit 15 d'entrée comme mentionné précédemment.

Selon l'invention, un appareil comprend un dispositif motorisé de pompage de liquide comprenant un moteur 12 électrique de pompage présentant un arbre 13 rotatif moteur accouplé à une hélice 14 de pompage interposée dans le circuit hydraulique de façon à y générer un débit de liquide entre l'entrée 9 de liquide et la sortie 10 de liquide. La sortie 10 de liquide est directement en regard de l'hélice de pompage de sorte que le liquide s'écoule hors de la sortie 10 de liquide selon une direction correspondant au débit de liquide généré par l'hélice de pompage, ce débit ayant une vitesse orientée selon l'axe 51 de rotation de l'hélice 14.

L'hélice 14 de pompage présente une orientation permettant de générer un débit de liquide avec une composante horizontale vers l'arrière.

De préférence, l'hélice 14 de pompage interposée dans le circuit hydraulique entre l'entrée 9 de liquide et la sortie 10 de liquide présente un axe de rotation incliné faisant, avec ladite direction longitudinale et avec le plan 50 théorique de roulage, un angle α différent de 90°. Cette hélice 14 est entraînée en rotation par le moteur 12 électrique de pompage qui présente, de préférence, un arbre 13 rotatif moteur parallèle à l'axe de rotation de l'hélice 14.

Selon l'invention, le moteur 12 électrique de pompage est disposé sous le circuit hydraulique, entièrement à l'extérieur de ce circuit hydraulique qui contourne entièrement le moteur 12 de pompage par le dessus. L'arbre 13 rotatif du moteur 12 de pompage traverse une paroi 30 inférieure inclinée délimitant le circuit hydraulique. L'étanchéité est assuré par un joint 18 torique.

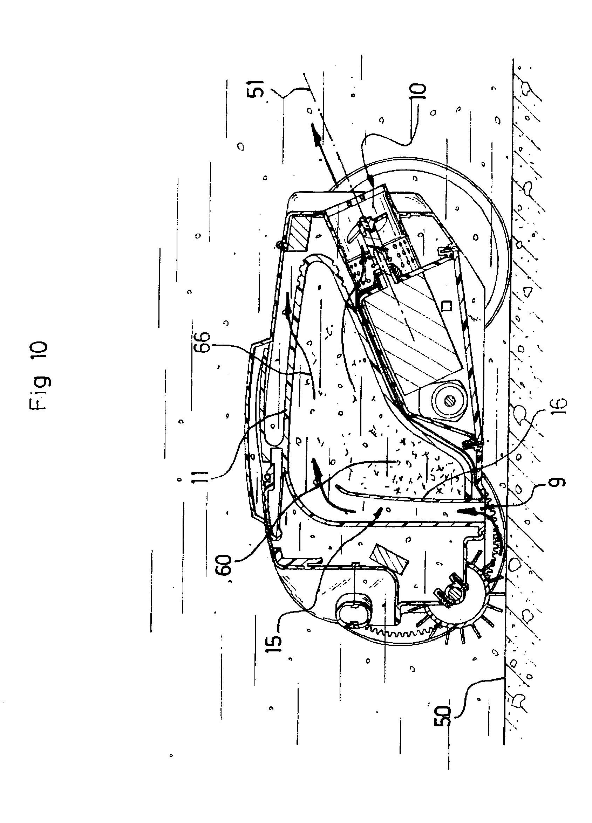

La figure 10 comporte une représentation de la circulation de liquide dans le corps 1 creux de l'appareil. Cette circulation est représentée schématiquement sur la figure 10 par les flèches 66. Du liquide entre dans le corps 1 creux par l'entrée 9 de liquide agencée sous l'appareil. Ce liquide passe dans le conduit 15 d'entrée de liquide pour atteindre la première coque 55 qui forme la poche de récupération des débris. Cette poche de récupération des débris laisse passer le liquide par le tissu filtrant et retient les débris 60 solides. Le liquide filtré atteint alors la sortie de liquide 10 et est éjectée à l'arrière de l'appareil, dans le bassin d'où il provient.

La sortie 10 de liquide étant en regard de l'hélice 14 de pompage, le liquide s'écoule hors de l'appareil par cette sortie avec une vitesse V orientée selon l'axe 51 de l'hélice 14 de pompage et ayant une composante longitudinale vers l'arrière qui induit par réaction des efforts, dont la résultante présente une composante longitudinale d'entraînement orientée vers l'avant qui participe à l'entraînement de l'appareil sur la surface immergée.

L'orientation de l'effort de réaction hydraulique créé par ce flux de sortie, et donc l'amplitude de sa composante longitudinale, dépendent de l'inclinaison α, par rapport au plan 50 théorique de roulage, de l'axe 51 de rotation de l'hélice et de la sortie 10 de liquide. De préférence, cette inclinaison α est comprise entre 15° et 45°.

Selon l'invention, le moteur électrique de pompage est disposé sous le circuit hydraulique, entièrement à l'extérieur de ce circuit hydraulique, de telle sorte que le dispositif 11 de filtrage du circuit hydraulique peut être retiré de l'appareil par le haut de l'appareil comme précédemment mentionné, sans être gêné par le moteur de pompage. Seule l'hélice 14 de pompage est agencée dans le circuit hydraulique de manière à pouvoir assurer le débit de liquide. Cette hélice 14 de pompage est agencée à l'arrière de l'appareil, à proximité de la sortie 10 de liquide. En d'autres termes, l'hélice 14 de pompage et la sortie 10 de liquide forment la partie terminale du circuit hydraulique.

Dans le mode préférentiel de réalisation de l'invention représenté sur les figures, les organes roulants de guidage et d'entraînement de l'appareil comprennent un essieu avant comprenant des roues 2 avants motrices, une de chaque côté, et un essieu arrière comprenant des roues 3 arrières non motrices, une de chaque côté.

En outre, de préférence et tel que représenté sur les figures, l'appareil comprend des brosses 4 agencées à l'avant de l'appareil. Ces brosses 4 sont destinées à assurer un brossage de la surface immergée et à déplacer les débris brossés vers l'arrière de l'appareil en direction de l'entrée 9 de liquide agencée sous l'appareil.

L'appareil comprend en outre au moins un moteur 20 électrique d'entraînement des roues avant 2 motrices. De préférence, l'appareil comprend deux moteurs d'entraînement, un de chaque côté, respectivement pour l'entraînement indépendant de chacune des roues 2 avant. Pour ce faire, chaque roue 2 avant présente une denture 5 interne coopérant avec un pignon entraîné par le moteur 20 d'entraînement correspondant.

Ces brosses 4 peuvent être de tous types. Selon un mode de réalisation de l'invention, l'appareil comprend deux brosses 4 avant coaxiales. Chaque brosse 4 est adaptée pour être mise en rotation autour d'un axe s'étendant selon une direction perpendiculaire à la direction longitudinale. Chaque brosse 4 comprend une pluralité d'ailettes 41 s'étendant radialement d'un arbre de brosse formant l'axe de rotation de la brosse 4. Les ailettes 41 sont par exemple en caoutchouc en en un matériau plastique résistant.

En outre, les brosses 4 sont de préférence également entraînées en rotation à partir d'au moins un moteur 20 électrique d'entraînement des roues 2 avant par l'intermédiaire d'un système à engrenages.

Ainsi, dans le mode de réalisation représenté, les organes roulants sont constitués des roues avant 2 motrices, des roues 3 arrières non motrices et des brosses 4 qui participent à l'entraînement et au guidage de l'appareil sur la surface immergée. Quoi qu'il en soit, les organes roulants 2, 3, 4 présentent des zones destinées à venir au contact avec la surface immergée qui sont coplanaires et définissent un plan 50 théorique de roulage. La direction longitudinale d'avancement de l'appareil est parallèle à ce plan 50 théorique de roulage.

Les roues avant 2 présentent de préférence un diamètre compris entre 100 mm et 500 mm, notamment compris entre 150 mm et 250 mm. Selon le mode de réalisation des figures, les roues avant 2 présentent un diamètre de l'ordre de 200mm. De la sorte, ces roues avant 2 facilitent le franchissement d'obstacles et présentent une motricité améliorée. Avantageusement, leur bande de roulement périphérique est formée ou revêtue d'un matériau antidérapant.

Les roues 2 avant et les brosses 4 constituent des organes roulants avants moteurs 2, 4 qui s'étendent en saillie vers l'avant par rapport aux autres éléments constitutifs de l'appareil, notamment le corps creux, de façon à former la partie extrême avant de l'appareil et à venir en premier en contact avec un obstacle rencontré au cours du déplacement vers l'avant.

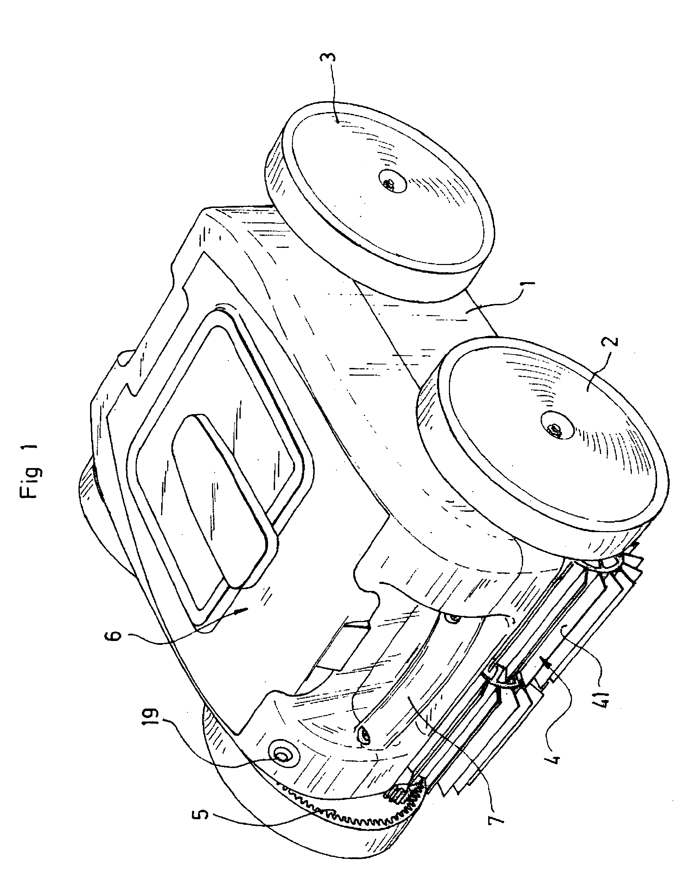

Les moteurs électriques d'entraînement et de pompage peuvent être de tous types connus. Selon un mode préférentiel de réalisation, ces moteurs électriques sont des moteurs basse tension. Ils peuvent être alimentés par une alimentation électrique extérieure à l'appareil par l'intermédiaire d'un câble électrique, non représenté sur les figures, qui est relié à l'appareil au niveau d'une zone 19 d'entrée du câble électrique dans l'appareil, tel que représenté sur la figure 1.

De plus, selon un mode de réalisation préférentiel de l'invention, l'appareil comprend également une poignée 7 de manoeuvre permettant à un utilisateur de porter l'appareil pour l'immerger dans un liquide et le ressortir de ce dernier. Cette poignée 7 est de préférence agencée à l'opposée de la sortie 10 de liquide façon que lorsque le corps 1 creux est suspendu par cette poignée, l'appareil bascule spontanément sous l'effet de la gravité dans une position dans laquelle la sortie 10 de liquide est située sous l'entrée 9 de liquide, ce qui permet une vidange de l'appareil. Lors du passage de l'appareil de la position de nettoyage à la position de vidange, les débris aspirés par l'appareil sont maintenus dans le dispositif de filtrage et ne sont pas susceptibles de ressortir de l'appareil.

Il va soi que l'invention peut faire l'objet de nombreuses variantes de réalisation et applications.

Par exemple, selon un mode de réalisation non représenté sur les figures, le dispositif 11 de filtrage peut former plus d'une entrée de liquide. De même, le boîtier filtrant peut être formé en une seule pièce jetable.

En outre l'invention s'applique à un appareil bidirectionnel capable de mouvement rétrograde.

## Revendications

1. Appareil nettoyeur de surface immergée comprenant :
- un corps (1) creux et des organes (2, 3, 4) de guidage et d'entraînement dudit corps (1) sur la surface immergée selon une direction principale d'avancement, dite direction longitudinale,
- une chambre (8) de filtration ménagée dans ledit corps (1) creux et présentant :
. au moins une entrée (9) de liquide située à la base dudit corps (1) creux au voisinage d'une extrémité longitudinale du corps (1) creux déterminant l'avant du corps (1) creux,
. au moins une sortie (10) de liquide hors dudit corps (1) creux,
. un circuit hydraulique adapté pour assurer une circulation de liquide entre chaque entrée (9) et chaque sortie (10) à travers un dispositif (11) de filtrage sous l'effet d'un dispositif (12, 13, 14) de pompage, **caractérisé en ce que** le dispositif (11) de filtrage comprenant au moins un boîtier (49, 55) filtrant monté dans la chambre (8) de filtration de façon à être amovible alors que l'appareil repose sur une surface horizontale dans une position correspondant à sa position de nettoyage lorsqu'il est en fonctionnement sur une surface immergée,
- ce boîtier (49, 55) filtrant constitue et délimite entièrement la partie du circuit hydraulique susceptible de transporter des débris, dite circuit sale,
- ce boîtier filtrant étant adapté pour pouvoir être inséré d'un seul tenant dans la chambre (8) de filtration et extrait d'un seul tenant hors de cette chambre (8) de filtration,
- ce boîtier (49, 55) filtrant présentant, lorsque monté dans la chambre (8) de filtration, au moins une extrémité inférieure débouchant à la base dudit corps (1) creux et constituant une entrée (9) de liquide dans le corps (1) creux de l'appareil.

2. Appareil selon la revendication 1, **caractérisé en ce que** chaque entrée (9) de liquide dans le corps (1) creux est formée d'une extrémité inférieure d'un boîtier (49, 55) filtrant monté amovible dans la chambre (8) de filtration.

3. Appareil selon l'une des revendications 1 ou 2, **caractérisé en ce que** chaque boîtier (49, 55) filtrant comprend :
- une première coque (55) présentant des parois (56, 57, 58, 59) périphériques filtrantes s'étendant vers l'arrière à partir d'une ouverture (64) avant de cette première coque (55) et délimitant, vers l'arrière, un volume de récupération des débris, lesdites parois (56, 57, 58, 59) filtrantes étant adaptées pour retenir les éventuels débris (60) véhiculés par le liquide et pour autoriser l'écoulement du liquide hors de cette première coque (55),
- une deuxième coque (49) assemblée à la première coque (55) à l'avant de celle-ci, ces deux coques (49, 55) et leur assemblage relatif étant adaptés de façon que :
. lorsque les deux coques (49, 55) sont assemblées l'une à l'autre, la deuxième coque (49) referme ladite ouverture (64) avant de la première coque (55), à l'exceptidn d'un passage d'entrée du liquide constituant une ouverture (54) d'entrée du liquide dans ledit volume de récupération des débris, la section de cette ouverture (54) d'entrée étant plus petite que celle de l'ouverture (64) avant de la première coque (55),
. les deux coques (49, 55) assemblées peuvent être déplacées l'une par rapport à l'autre, après extraction du boîtier filtrant hors de la chambre (8) de filtration, en dégageant ladite ouverture (64) avant de la première coque (55) faisant office d'ouverture de vidange de cette première coque (55).

4. Appareil selon la revendication 3, **caractérisé en ce que** les deux coques (49, 55) sont assemblées l'une à l'autre de façon à pouvoir être dissociées l'une de l'autre par simple manipulation sans outils.

5. Appareil selon l'une des revendications 3 ou 4, **caractérisé en ce que** l'ouverture (64) avant de la première coque (55) s'étend sur le pourtour d'une paroi (16) arrière de la deuxième coque (49) et de ladite ouverture (54) d'entrée.

6. Appareil selon l'une des revendications 3 à 5, **caractérisé en ce que** les deux coques (49, 55) sont assemblées l'une à l'autre selon une zone de jonction qui s'étend globalement transversalement et orthogonalement à la direction longitudinale.

7. Appareil selon l'une des revendications 3 à 6, **caractérisé en ce que** la deuxième coque (49) forme au moins un conduit (15) d'entrée de liquide s'étendant à partir d'une extrémité inférieure de ce conduit (15) d'entrée débouchant à la base du corps (1) creux et constituant une entrée (9) de liquide.

8. Appareil selon l'une des revendications 1 à 7, **caractérisé en ce que** chaque boîtier filtrant (49, 55) présente une poignée (28) de manipulation du boîtier (49, 55) filtrant.

9. Appareil selon l'une des revendications 1 à 8, **caractérisé en ce qu'**il comprend en outre une trappe (6) d'accès à chaque boîtier (49, 55) filtrant, ménagée sur une paroi extérieure du corps (1) creux et adaptée pour permettre le démontage et l'extraction du boîtier (49, 55) filtrant hors du corps (1) creux en vue de son nettoyage.

10. Appareil selon la revendication 9, **caractérisé en ce que** ladite trappe (6) d'accès est ménagée sur une paroi supérieure du corps (1) creux.

11. Appareil selon l'une des revendications 1 à 10, **caractérisé en ce qu'**il est exempt de clapet anti-retour du liquide.

12. Appareil selon l'une des revendications 1 à 11, **caractérisé en ce qu'**il comprend au moins une sortie (10) de liquide hors du corps (1) creux, dite sortie arrière, décalée vers l'arrière par rapport au boîtier (49, 55) filtrant.

13. Appareil selon la revendication 12, **caractérisé en ce qu'**il comprend une sortie (10) arrière générant un flux de liquide orienté avec une composante longitudinale vers l'arrière.

14. Appareil selon l'une des revendications 1 à 13, **caractérisé en ce qu'**il comprend un dispositif motorisé (12, 13, 14) de pompage du liquide entre chaque entrée (9) de liquide et chaque sortie (10) de liquide via ledit boîtier (49, 55) filtrant.

15. Appareil selon l'une des revendications 1 à 14, **caractérisé en ce que** le dispositif (11) de filtrage est constitué d'un unique boîtier (49, 55) filtrant monté amovible dans la chambre (8) de filtration.

## Claims

1. An apparatus for cleaning an immersed surface comprising:
- a hollow body (1) and members (2, 3, 4) for guiding and actuating said body (1) over the immersed surface in a main orientation of advance, referred to as the longitudinal orientation,
- a filtration chamber provided in said hollow body (1) and which has:
. at least one liquid inlet (9) located at the base of said hollow body (1) in the region of a longitudinal end of the hollow body (1) defining the front of the hollow body (1),
. at least one liquid outlet (10) out of said hollow body (1),
. a hydraulic circuit which is configured for providing a circulation of liquid between each inlet (9) and each outlet (10) through a filtering device (11), under the action of a pumping device (12, 13, 14),
the filtering device (11) comprising at least one filtering casing (49, 55) which is mounted in the filtration chamber (8) so as to be able to be removed as the apparatus is resting on a horizontal surface in a position which corresponds to the cleaning position thereof when it is operating over an immersed surface, **characterised in that**
- this filtering casing (49, 55) entirely constitutes and delimits the portion of the hydraulic circuit which is capable of conveying debris, referred to as the unclean circuit,
- this filtering casing being able to be inserted into the filtration chamber (8) in one piece and removed from this filtration chamber (8) in one piece,
- this filtering casing (49, 55) having, when mounted in the filtration chamber (8), at least a lower end which opens at the base of said hollow body (1) and which constitutes a liquid inlet (9) into the hollow body (1) of the apparatus.

2. An apparatus according to claim 1, **characterised in that** each liquid inlet (9) into the hollow body (1) is formed by a lower end of a filtering casing (49, 55) which is removably mounted in the filtration chamber (8) .

3. An apparatus according to either claim 1 or claim 2, **characterised in that** each filtering casing (49, 55) comprises:
- a first shell (55) which has peripheral filtering walls (56, 57, 58, 59) which extend towards the rear from a front opening (64) of this first shell (55) and which delimit, towards the rear, a space for recovering debris, said filtering walls (56, 57, 58, 59) being capable of retaining any debris (60) conveyed by the liquid and allowing the flow of liquid from this first shell (55),
- a second shell (49) which is fitted to the first shell (55) at the front thereof, these two shells (49, 55) and their relative assembly being adapted in such a manner that:
. when the two shells (49, 55) are fitted together, the second shell (49) closes said front opening (64) of the first shell (55), with the exception of a liquid inlet passage which constitutes a liquid inlet opening (54) into said debris recovery space, the cross-section of this inlet opening (54) being smaller than that of the front opening (64) of the first shell (55),
. the two assembled shells (49, 55) can be moved relative to each other, after removing the filtering casing from the filtration chamber (8), by disengaging said front opening (64) of the first shell (55) which acts as an opening for emptying this first shell (55).

4. An apparatus according to claim 3, **characterised in that** the two shells (49, 55) are fitted together so as to be able to be disengaged from each other by means of simple operating without any tools.

5. An apparatus according to either claim 3 or claim 4, **characterised in that** the front opening (64) of the first shell (55) extends over the periphery of a rear wall (16) of the second shell (49) and said inlet opening (54).

6. An apparatus according to any one of claims 3 to 5, **characterised in that** the two shells (49, 55) are fitted together along a connection zone which generally extends transversely and orthogonally relative to the longitudinal orientation.

7. An apparatus according to any one of claims 3 to 6, **characterised in that** the second shell (49) forms at least one liquid inlet conduit (15) which extends from a lower end of this inlet conduit (15) which opens at the base of the hollow body (1) and which constitutes a liquid inlet (9).

8. An apparatus according to any one of claims 1 to 7, **characterised in that** each filtering casing (49, 55) has a handle (28) for operating the filtering casing (49, 55).

9. An apparatus according to any one of claims 1 to 8, **characterised in that** it further comprises an access flap (6) to each filtering casing (49, 55), which is provided on an outer wall of the hollow body (1) and which is capable of allowing the filtering casing (49, 55) to be disassembled and removed from the hollow body (1) in order for it to be cleaned.

10. An apparatus according to claim 9, **characterised in that** said access flap (6) is provided on an upper wall of the hollow body (1).

11. An apparatus according to any one of claims 1 to 10, **characterised in that** it does not have any liquid non-return valve.

12. An apparatus according to any one of claims 1 to 11, **characterised in that** it comprises at least one liquid outlet (10) out of the hollow body (1), which is referred to as the rear outlet, and which is offset towards the rear relative to the filtering casing (49, 55) .

13. An apparatus according to claim 12, **characterised in that** it comprises a rear outlet (10) which generates a flux of liquid which is orientated with a longitudinal component towards the rear.

14. An apparatus according to any one of claims 1 to 13, **characterised in that** it comprises a motorized device (12, 13, 14) for pumping liquid between each liquid inlet (9) and each liquid outlet (10) via said filtering casing (49, 55).

15. An apparatus according to any one of claims 1 to 14, **characterised in that** the filtering device (11) is constituted by a single filtering casing (49, 55) which is removably mounted in the filtration chamber (8) .

## Patentansprüche

1. Gerät zur Reinigung einer untergetauchten Fläche, das folgende Teile umfasst:
- Einen Hohlkörper (1) und Organe (2, 3, 4) für Führung und Antrieb des besagten Hohlkörpers (1) auf der untergetauchten Fläche in einer hauptsächlichen Vorwärtsrichtung, der sogenannten Längsrichtung,
- eine Filterkammer (8), die im besagten Hohlkörper (1) gestaltet ist und folgende Teile aufweist:
. Zumindest einen Eintritt (9) von Flüssigkeit, der sich an der Basis des besagten Hohlkörpers (1) und neben einem Längsende des Hohlkörpers (1) befindet, das den vorderen Teil des Hohlkörpers (1) bestimmt,
. zumindest einen Austritt (10) von Flüssigkeit aus dem besagten Hohlkörper (1),
. einen Hydraulikkreis, der geeignet ist, einen Umlauf von Flüssigkeit zwischen jedem Eintritt (9) und jedem Austritt (10) durch eine Filtervorrichtung (11) unter der Wirkung einer Pumpvorrichtung (12, 13, 14) sicher zu stellen, wobei die Filtervorrichtung (11) zumindest ein Filtergehäuse (49, 55) umfasst, das so in die Filterkammer (8) montiert ist, dass es herausnehmbar ist, während das Gerät auf einer horizontalen Fläche in einer Position ruht, die seiner Reinigungsposition entspricht, wenn es auf einer untergetauchten Fläche in Betrieb ist.
- Dieses Filtergehäuse (49, 55) bildet den Teil des Hydraulikkreises und grenzt ihn vollständig ab, der Abfälle transportiert, also den Schmutzkreislauf,
- wobei dieses Filtergehäuse geeignet ist, um einstückig in die Filterkammer (8) eingesetzt und einstückig aus dieser Filterkammer (8) herausgenommen werden zu können,
- wobei dieses Filtergehäuse (49, 55), wenn es in die Filterkammer (8) montiert ist, zumindest ein unteres Ende aufweist, das zur Basis des besagten Hohlkörpers (1) führt und einen Eintritt (9) von Flüssigkeit in den Hohlkörper (1) des Geräts bildet.

2. Gerät nach Anspruch 1, **dadurch gekennzeichnet, dass** jeder Eintritt (9) von Flüssigkeit in den Hohlkörper (1) aus einem unteren Ende eines Filtergehäuses (49, 55) gebildet wird, das herausnehmbar in die Filterkammer (8) montiert ist.

3. Gerät nach einem der vorstehenden Ansprüche 1 oder 2, **dadurch gekennzeichnet, dass** jedes Filtergehäuse (49, 55) folgende Teile umfasst:
eine erste Schale (55), die periphere Filterwände (56, 57, 58, 59) aufweist, die sich nach hinten erstrecken, und dies ab einer vorderen Öffnung (64) dieser ersten Schale (55), und die nach hinten einen Raum für das Sammeln von Abfällen abgrenzen, wobei die besagten Filterwände (56, 57, 58, 59) geeignet sind, die eventuellen Abfälle (60) zurückzuhalten, die von der Flüssigkeit mitgeführt werden, und den Abfluss der Flüssigkeit aus dieser ersten Schale (55) zuzulassen,
eine zweite Schale (49), die an die erste Schale (55) an deren Vorderteil montiert ist, wobei diese beiden Schalen (49, 55) und ihre relative Montage so angepasst sind, dass:
. wenn die beiden Schalen aneinander montiert sind, die zweite Schale (49) die besagte vordere Öffnung (64) der ersten Schale (55) schließt unter Ausnahme eines Eintrittsgangs für die Flüssigkeit, der eine Eintrittsöffnung (54) für die Flüssigkeit in den besagten Raum für die Abfallsammlung bildet, wobei der Querschnitt dieser Eintrittsöffnung (54) kleiner ist als derjenige der vorderen Öffnung (64) der ersten Schale (55),
. die beiden montierten Schalen (49, 55) gegeneinander verschoben werden können, nachdem das Filtergehäuse aus der Filterkammer (8) herausgenommen wurde, indem die besagte vordere Öffnung (64) der ersten Schale (55) freikommt, die als Entleerungsöffnung dieser ersten Schale (55) dient.

4. Gerät nach Anspruch 3, **dadurch gekennzeichnet, dass** die beiden Schalen (49, 55) so aneinander montiert sind, dass sie durch einfachen Handgriff ohne Werkzeug voneinander getrennt werden können.

5. Gerät nach einem der vorstehenden Ansprüche 3 oder 4, **dadurch gekennzeichnet, dass** sich die vordere Öffnung (64) der ersten Schale (55) auf dem äußeren Umfang einer rückwärtigen Wand (16) der zweiten Schale (49) und der Eintrittsöffnung (54) erstreckt.

6. Gerät nach einem beliebigen der vorstehenden Ansprüche 3 bis 5, **dadurch gekennzeichnet, dass** die beiden Schalen (49, 55) mit einer Verbindungszone aneinander montiert sind, die sich insgesamt quer und orthogonal zur Längsrichtung erstreckt.

7. Gerät nach einem beliebigen der vorstehenden Ansprüche 3 bis 6, **dadurch gekennzeichnet, dass** die zweite Schale (49) zumindest eine Eintrittsleitung (15) für Flüssigkeit bildet, die sich ab einem unteren Ende dieser Eintrittsleitung (15) erstreckt und zur Basis des Hohlkörpers (1) führt und einen Eintritt (9) für Flüssigkeit bildet.

8. Gerät nach einem beliebigen der vorstehenden Ansprüche 1 bis 7, **dadurch gekennzeichnet, dass** jedes Filtergehäuse (49, 55) einen Griff (28) zur Handhabung des Filtergehäuses (49, 55) aufweist .

9. Gerät nach einem beliebigen der vorstehenden Ansprüche 1 bis 8, **dadurch gekennzeichnet, dass** es ferner eine Deckelklappe (6) für den Zugriff zu jedem Filtergehäuse (49, 55) umfasst, die auf einer Außenwand des Hohlkörpers (1) gestaltet und geeignet ist, den Ausbau und die Herausnahme des Filtergehäuses (49, 55) aus dem Hohlkörper (1) zu Reinigungszwecken zu ermöglichen.

10. Gerät nach Anspruch 9, **dadurch gekennzeichnet, dass** die besagte Deckelklappe (6) auf der oberen Wand des Hohlkörpers (1) gestaltet ist.

11. Gerät nach einem beliebigen der vorstehenden Ansprüche 1 bis 10, **dadurch gekennzeichnet, dass** es keine Rückschlagklappe für die Flüssigkeit hat.

12. Gerät nach einem beliebigen der vorstehenden Ansprüche 1 bis 11, **dadurch gekennzeichnet, dass** es zumindest einen Austritt (10) für Flüssigkeit aus dem Hohlkörper (1) hat, den sogenannten rückwärtigen Austritt, der gegenüber dem Filtergehäuse (49, 55) nach hinten versetzt ist.

13. Gerät nach Anspruch 12, **dadurch gekennzeichnet, dass** es einen rückwärtigen Austritt (10) umfasst, der einen Flüssigkeitsstrom erzeugt, der mit einer Längskomponente nach hinten gerichtet ist.

14. Gerät nach einem beliebigen der vorstehenden Ansprüche 1 bis 13, **dadurch gekennzeichnet, dass** es eine motorbetriebene Vorrichtung (12, 13, 14) zum Pumpen der Flüssigkeit zwischen jedem Eintritt (9) von Flüssigkeit und jedem Austritt (10) von Flüssigkeit über das besagte Filtergehäuse umfasst.

15. Gerät nach einem beliebigen der vorstehenden Ansprüche 1 bis 14, **dadurch gekennzeichnet, dass** die Filtervorrichtung (11) aus einem einzigen Filtergehäuse (49, 55) besteht, das herausnehmbar in die Filterkammer (8) montiert ist.
